# EUROPÄISCHE PATENTANMELDUNG

(11) **EP 0 731 418 A2**
(43) Veröffentlichungstag der Anmeldung: **11.09.1996**
(21) Anmeldenummer: 96103089.7
(22) Anmeldetag: 29.02.1996
(51) Int. Cl.: G06K 9/20

(54) **Verfahren und Vorrichtung zum Identifizieren und Lokalisieren eines Objektes**

(30) Priorität: 06.03.1995 DE 19507812
(71) Anmelder: Marinitsch, Waldemar, D-81675 München (DE)
(72) Erfinder: Fasshauer, Peter, Dr., 85579 Neubiberg (DE)
(74) Vertreter: WILHELMS, KILIAN & PARTNER Patentanwälte

(57) **Zusammenfassung**

Verfahren und Vorrichtung zum Identifizieren und Lokalisieren eines Objektes 1. Über eine Kamera 2 wird ein Bild eines räumlichen Bereiches aufgenommen, von dem vermutet wird, daß er an einem bestimmten Teil das zu erkennende Objekt 1 aufweist. Über eine Zeitsteuerung 10 wird das von der Kamera 2 aufgenommene Bild in einem Bildspeicher gespeichert und wird eine künstliche Lichtquelle 4 angeschaltet, die so angeordnet und ausgebildet ist, daß sie nur den Teil beleuchtet, an dem das zu erkennende Objekt 1 vermutet wird. Das Bild vom Bildspeicher 5 und das von der Kamera 2 aufgenommene Bild mit künstlicher Beleuchtung liegen an einer Differenzstufe 6, die als Differenzbild ein Graubild erzeugt, in dem das zu erkennende Objekt vor einem dunklen Hintergrund erscheint. Das Graubild von der Differenzstufe 6 liegt an einem Komparator 7, der das Graubild in ein binäres Schwarz-Weiß-Bild umwandelt, das an einem Bildverarbeitungsteil 9 liegt, der beispielsweise über ein Maskenverfahren das Objekt identifiziert und seine exakte Position bestimmt.

## Beschreibung

Die Erfindung betrifft ein verfahren und eine Vorrichtung zum Identifizieren und Lokalisieren eines Objektes.

Ein derartiges Verfahren und eine derartige Vorrichtung dienen dazu, automatisch ein Objekt zu identifizieren und seine genaue Position zu bestimmen, und gehören somit zu dem Bereich aktiver Erfassungssysteme, die vorgegebene Strukturmerkmale des Objektes erkennen können, um darüber die Identifikation und die Bestimmung der Position des Objektes, insbesondere in Bezug auf die Position eines anderen Objektes, beispielsweise sich bewegenden gelenkten Objektes wie eines Fahrzeuges oder eines Roboterarmes, festzustellen.

Diese Feststellung der Position eines Objektes bezüglich eines anderen Objektes ist bei vielen Aufgaben der Robotik erforderlich.

Eine typische Anwendung des erfindungsgemäßen Verfahrens und der erfindungsgemäßen Vorrichtung ist die automatische Bestimmung der Koordinaten eines Objektes oder einer Last, das oder die von einem führerlosen Transportfahrzeug aufgenommen werden soll. Dazu muß die Last erkannt und ihre Position zunächst bestimmt werden, damit das Fahrzeug in eine vorbestimmte Lage gesteuert werden kann, in der es die Last aufnehmen kann. Ein weiteres Anwendungsgebiet des erfindungsgemäßen Verfahrens und der erfindungsgemäßen Vorrichtung ist die Steuerung von Fertigungsautomaten, bei denen bestimmte Werkstücke identifiziert, lokalisiert und bearbeitet werden sollen oder bestimmte Werkzeuge identifiziert, lokalisiert und benutzt werden sollen.

Um das zu erreichen, müssen bestimmte Grundstrukturen des Objektes sicher identifiziert werden, durch die sich das jeweilige Objekt eindeutig von anderen Objekten unterscheidet. Nach der Identifizierung dieser Strukturen kann dann die gewünschte Positionsbestimmung erfolgen.

Die der Erfindung zugrundeliegende Aufgabe besteht darin, ein Verfahren und eine Vorrichtung zum Identifizieren und Lokalisieren eines Objektes zu schaffen, die mit einfachen Mitteln arbeiten und daher kostengünstig sind.

Diese Aufgabe wird gemäß der Erfindung durch die Ausbildung gelöst, die im kennzeichnenden Teil des Patentanspruchs 1 bzw. des Patentanspruchs 5 angegeben ist.

Das erfindungsgemäße Verfahren und die erfindungsgemäße Vorrichtung eignen sich insbesondere dazu, Objekte mit ausgeprägter Kantenstruktur zu identifizieren, deren Geometrie fest vorgegeben ist. Von den verschiedenen physikalischen Möglichkeiten, derartige Strukturen zu erkennen, nämlich dem Ultraschallverfahren, dem Hochfrequenzverfahren und dem optischen Verfahren, wurde das optische Verfahren gewählt, da sich Kanten um so genauer erfassen lassen, je kürzer die Wellenlänge des Informationsträgers, d.h. der Quelle des aktiven Systems, ist. Weiterhin stehen für optische Verfahren preiswerte Komponenten auf dem Markt zur Verfügung, so daß sich eine hohe Genauigkeit mit einer hohen Wirtschaftlichkeit kombinieren läßt.

Ein wesentliches Problem bei der optischen Aufnahme von Objekten und der Verarbeitung der entsprechenden Bilder besteht allerdings darin, daß das entstehende Signal stets von der Beleuchtung des Objektes, der Beleuchtung der Umgebung und von anderen Lichtstörquellen, wie beispielsweise Lampen oder dem Sonnenlicht, beeinflußt wird. Falls die Lichtverhältnisse des aufgenommenen Bildes nicht konstant sind, was bei Außenanwendungen immer der Fall ist, ergibt sich eine gleichfalls nicht konstante Abbildung des betreffenden Objektes in einem Umfeld mit wechselnden Lichtverhältnissen. Das erschwert die Identifizierung eines Objektes mit einem optischen Bildverarbeitungsverfahren erheblich.

Bei dem erfindungsgemäßen Verfahren und der erfindungsgemäßen Vorrichtung werden störende Lichtquellen sowie Einflüsse von wechselnden Beleuchtungen des Objektes oder wechselnden Lichtverhältnissen der Umgebung vollständig ausgeschaltet, indem ein Bild des Objektes erzeugt wird, in dem dieses vor einem künstlich erzeugten dunklen Hintergrund ohne Objekte und Lichtquellen in der Umgebung in einer konstanten Abbildung erscheint. Danach kann in einfacher Weise eine Bildverarbeitung erfolgen, mit der das Objekt identifiziert und lokalisiert wird. Da dazu im wesentlichen nur die Kanten des Objektes verwandt werden müssen, reicht es aus, ein binäres Bildes oder Schwarz-Weiß-Bild des zu erkennenden Objektes aus dem aufgenommenen Bild zu erzeugen, das völlig unabhängig von der Umgebung ist und alle Störquellen ausschließt.

Besonders bevorzugte Weiterbildungen und Ausgestaltungen des erfindungsgemäßen Verfahrens und der erfindungsgemäßen Vorrichtung sind Gegenstand der Patentansprüche 2 bis 4 bzw. 6 bis 9.

Im folgenden wird anhand der zugehörigen Zeichnung ein besonders bevorzugtes Ausführungsbeispiel der Erfindung näher beschrieben. Es zeigen
Fig. 1 schematische Stirnansichten von typischen Objekten, die erkannt werden können,
Fig. 2 die Bildverarbeitung bei dem Verfahren zum Erkennen eines Objektes,
Fig. 3 das schematische Schaltbild einer Vorrichtung zum Erkennen eines Objektes,
Fig. 4 in einem Diagramm die spektrale Verteilung des Tageslichtes und des künstlichen Beleuchtungslichtes sowie der Kameraempfindlichkeit bei dem Verfahren und der Vorrichtung zum Erkennen eines Objektes und
Fig. 5 in einer graphischen Darstellung die Signalamplitude einer Videokamera gegenüber der Beleuchtungsstärke des Lichts.

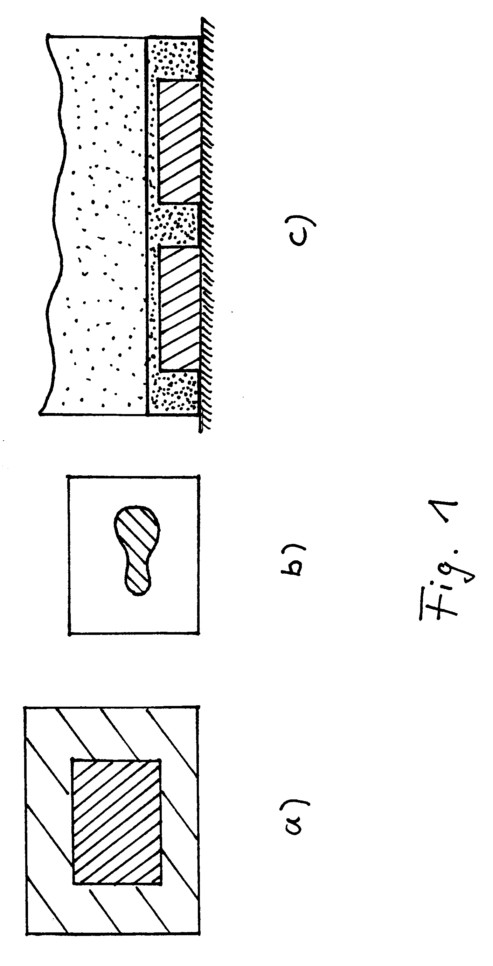

In den Fig. 1a, 1b und 1c sind Seiten- oder Stirnansichten von Objekten dargestellt, die mit dem im folgenden beschriebenen Verfahren und der im folgenden beschriebenen Vorrichtung erkannt werden können. Diese Objekte haben eine ausgeprägte Kantenstruktur, deren Geometrie fest vorgegeben ist. Diese Kantenstruktur ergibt sich dadurch, daß im Inneren mit Luft gefüllte Hohlräume vorhanden sind und der Körper des Objektes innen und außen genau begrenzt ist. Die in Fig. 1c dargestellte Struktur entspricht beispielsweise der einer Transportpalette, die von Gabelstaplern aufgenommen werden kann.

Das Grundprinzip der Erkennung eines derartigen Objektes besteht darin, daß das Objekt von einer Videokamera ohne und mit der künstlichen Beleuchtung einer gesteuerten Lichtquelle aufgenommen wird, das Bild von der Videokamera in einem Bildspeicher gespeichert wird, ein Differenzbild erzeugt wird und das erhaltene Differenzbild anschließend in bestimmter Weise verarbeitet wird.

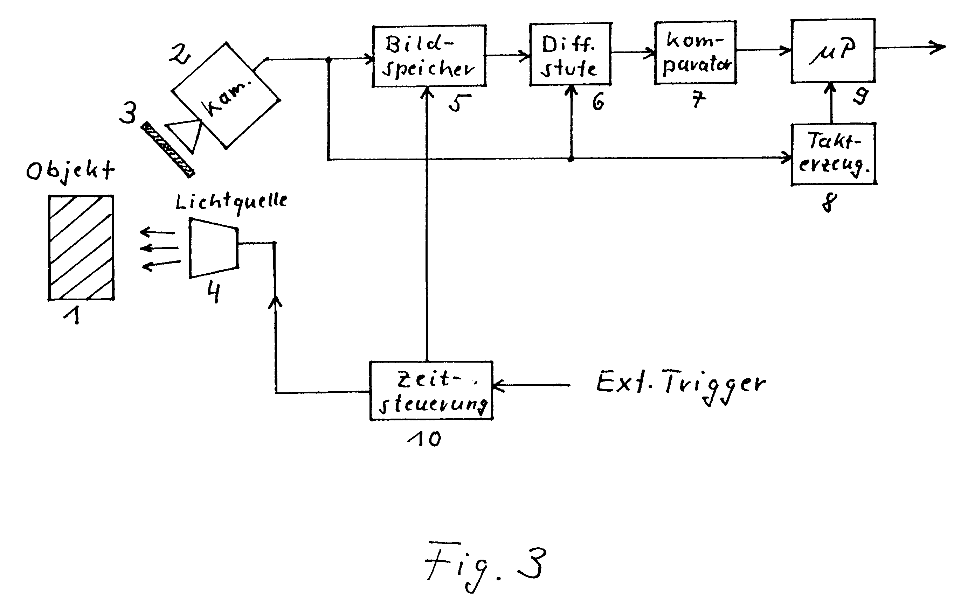

Wie es in Fig. 3 dargestellt ist, ist dazu eine Videokamera 2 vorgesehen, die so ausgebildet und angeordnet ist, daß sie ein Bild eines räumlichen Bereiches aufnimmt, von dem vermutet wird, daß er an einem bestimmten Teil das zu erkennende Objekt 1 aufweist. Das Ausgangssignal der Videokamera 2, d.h. die Videodaten, liegen an einem Bildspeicher 5. Über eine von außen auslösbare Zeitsteuerung 10 kann eine Lichtquelle 4 angeschaltet werden, die so angeordnet und ausgebildet ist, daß sie nur den Teil beleuchtet, an dem das zu erkennende Objekt 1 vermutet wird. Die Zeitsteuerung 10 ist gleichfalls mit dem Bildspeicher 5 verbunden und bewirkt, daß kurz vor dem Abschalten der Lichtquelle 4 das Bild der Videokamera 2 ohne künstliche Beleuchtung im Bildspeicher 5 gespeichert wird, so daß es an einer Differenzstufe 6 liegt. Das in Echtzeit aufgenommene Videobild der Kamera 2, d.h. das Bild mit künstlicher Beleuchtung durch die Lichtquelle 4, liegt danach direkt an der Differenzstufe 6. Der zeitliche Abstand zwischen dem Abspeichern des Bildes der Videokamera 2 und dem Abschalten der Lichtquelle 4 kann beispielsweise bei 1 s liegen und ist in der Zeitsteuerung 10 vorgegeben. Die Abspeicherung des Bildes der Videokamera 2 wird dabei abgeschlossen, bevor die Lichtquelle 4 angeschaltet wird. Das von der Differenzstufe 6 gebildete Differenzbild liegt an einem Komparator 7, der aus dem von der Differenzstufe 6 kommenden Graubild ein Schwarz-Weiß-Bild, d.h. ein binäres Bild, erzeugt, indem er die Grauwerte mit einem eingegebenen Vergleichswert vergleicht, der in der Nähe des Schwarzwertes, insbesondere bei etwa 50 % des minimalen Grauwertes liegt. Das Ausgangssignal des Komparators 7 liegt an einem Bildsignalprozessor 9, der beispielsweise über ein Maskenverfahren eine Identifizierung des Objektes und anschließend eine genaue Bestimmung seiner Position durchführt. Dazu wird das binäre Bild des Komparators 7 mit im Mikroprozesor 9 gespeicherten Masken verglichen, die die Grundstrukturen des zu identifizierenden und zu lokalisierenden Objektes wiedergeben. Die passende Maske wird über das Objekt im binären Bild geschoben und aus ihrer Lage werden dann die Koordinaten der Position des Objektes bestimmt.

Wie es in Fig. 3 dargestellt ist, kann die Bildverarbeitung im Mikroprozessor 9 über eine Takterzeugung 8 getaktet sein, die aus den Ausgangssignalen der Videokamera 2, beispielsweise aus den darin enthaltenen Synchronsignalen die dazu benötigten Taktsignale erzeugt. In dieser Weise wird eine synchrone Bildverarbeitung im Mikroprozessor 9 erreicht. Die Bildverarbeitung im Mikroprozessor kann allerdings auch asynchron erfolgen.

Vor das Objektiv der Kamera 2 ist ein spezielles Filter 3 gesetzt, das so gewählt ist, daß die spektrale Charakteristik der Anordnung aus Filter und Videokamera einerseits sich von der spektralen Verteilung des natürlichen Tageslichtes deutlich unterscheidet und andererseits möglichst gut zu der spektralen Verteilung der Lichtquelle paßt.

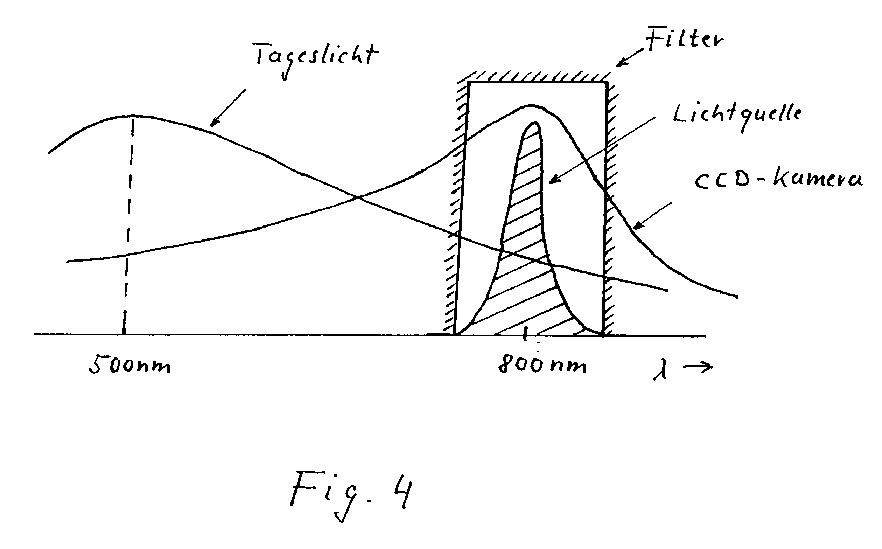

Wenn als Videokamera 2 eine übliche CCD-Videokamera vorgesehen ist, deren Empfindlichkeit im Infrarotgebiet bei ca. 800 nm maximal ist, wie es in Fig. 4 dargestellt ist, dann ergeben sich optimale Aufnahmeverhältnisse, wenn als Filter 3 ein Bandpaßfilter mit einer Zentralwellenlänge von gleichfalls 800 nm und einer Breite von ca. 50 nm gewählt ist. Dieser Bandpaß ist in Fig. 4 durch einen schraffierten Rahmen angedeutet. Filter mit einem derartigen Bandpaß sind als sog. Interferenzfilter auf dem Markt erhältlich.

Die dazu passende Lichtquelle 4 sollte eine spektrale Lichtverteilung haben, die im Bereich der Filtercharakteristik liegt, wie es durch die schraffiert dargestellte Verteilungskurve in Fig. 4 dargestellt ist. Zwar erfüllen Laserlichtquellen oder Quellen auf der Basis von Infrarotleuchtdioden diese Bedingung, aus Kostengründen oder mangels ausreichender Strahlungsleistung auf das zu beleuchtende Objekt kommen sie derzeit für die praktische Anwendung nicht in Frage. Eine kostengünstige Lösung ist daher die Verwendung eines Scheinwerfers als Lichtquelle 4, der eine Lampe aufweist, die eine Farbtemperatur von ca. 2900°K hat. Die spektrale Verteilung des Lichtes einer derartigen Lichtquelle liegt zwar nicht vollständig im Filterbereich von Fig. 4, hat jedoch bei entsprechender Leistung höhere Energieanteile in diesem Wellenlängengebiet als das Sonnenlicht, wodurch sich eine in der Praxis ausreichende Unterscheidbarkeit zwischen dem natürlichen Sonnenlicht und der künstlichen Beleuchtung ergibt.

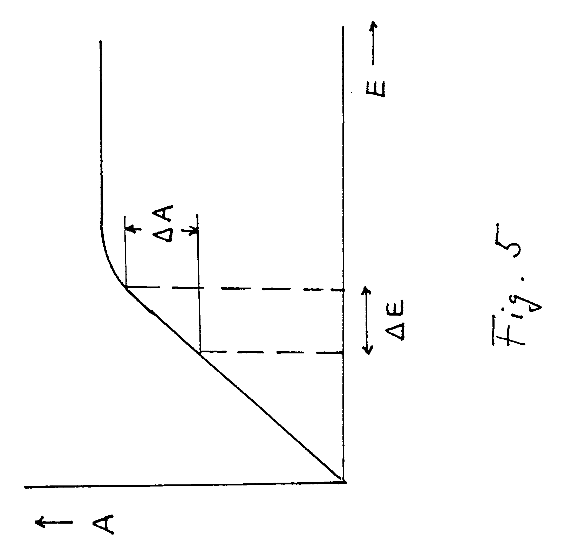

Der Zweck einer derartigen spektralen Trennung der Beleuchtungsquellen und der Filterung ergibt sich in Verbindung mit der Aufnahmekennlinie einer Videokamera, die den Zusammenhang zwischen der Signalamplitude A und der Beleuchtungsstärke E auf der lichtempfindlichen Schicht zeigt und beispielsweise in Fig. 5 dargestellt ist. Es sollte somit dafür gesorgt sein, daß bei allen möglichen Beleuchtungsverhältnissen in dem aufgenommenen räumlichen Bereich die Kameraaussteuerung im nicht gesättigten Bereich der Kennlinie gehalten wird. Da das Maximum der Tageslichtverteilung je nach Witterung zwischen 500 nm und 580 nm, also außerhalb der Filtercharakteristik liegt, werden bei abgeschalteter Lichtquelle 4 die Signalamplituden der Objekte soweit reduziert, daß die Kameraaussteuerung stets im gewünschten Kennlinienbereich bleibt.

Die oben beschriebene Vorrichtung arbeitet in der folgenden Weise:

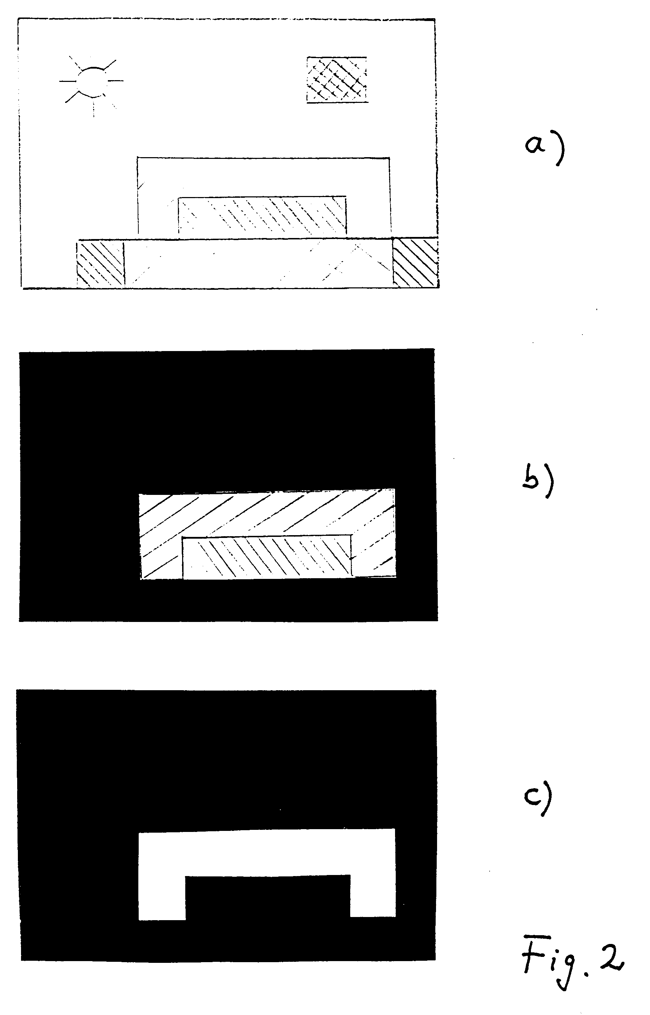

Zunächst wird mit der Kamera 2 ein räumlicher Bereich oder eine Szene mit mehreren Objekten und beispielsweise einer Störquelle, die in die Kamera scheint, z.B. der Sonne, aufgenommen. Ein derartiges Bild ist in Fig. 2a dargestellt.

Über die Zeitsteuerung 10 wird zu einem bestimmten von einem äußeren Triggersignal ausgelösten Zeitpunkt das Kamerasignal in den Bildspeicher 5 eingelesen, so daß in der folgenden Differenzstufe 6 als Differenzbild ein Dunkelbild entsteht, da die Bildinhalte des Ausgangsbildes des Bildspeichers 5 und des anschließend in Echtzeit aufgenommenen Bildes der Kamera 2 zu diesem Zeitpunkt gleich sind.

Wenn dann die künstliche Lichtquelle 4 eingeschaltet wird, die so angeordnet und ausgebildet ist, daß sie nur den Teil des von der Kamera 2 aufgenommenen räumlichen Bereiches beleuchtet, an dem das Objekt 1 vermutet wird, dann tritt am Ausgang der Differenzstufe 6 ein Bildsignal mit einer Amplitude auf, die dem künstlich beleuchteten Objekt und dessen Umfeld entspricht. In der Kennlinie von Fig. 5 ergibt sich diese Differenzamplitude durch eine zusätzlich durch die Quelle 4 hervorgerufene Änderung ΔE der Beleuchtungsstärke. Dieses Differenzbild ist in Fig. 2b dargestellt und ist ein Graubild des betreffenden Objektes, in dem andere Objekte und die Störlichtquelle bereits beseitigt sind. Der unmittelbare Bereich des zu erkennenden Objektes liegt in Fig. 2b vor einem nahezu dunklen Hintergrund.

Je genauer dabei die Kontur des Objektes durch die Lichtquelle 4 ausgeleuchtet wird, umso schärfer ist die optische Trennung von der Umgebung. In der praktischen Anwendung wird jedoch stets ein gewisses Toleranzfeld für die Ausleuchtung benötigt, d.h. ein gewisser über das Objekt hinausgehender Teil des räumlichen Bereichs beleuchtet, in dem das Objekt vermutet wird oder durch eine entsprechende Vorpositionierung angeordnet ist. Die Lichtverteilung der Lichtquelle 4 ist an dieses Toleranzfeld angepaßt.

Im Komparator 7 wird aus dem Ausgangsgraubild der Differenzstufe 6 ein binäres Bild oder Schwarz-Weiß-Bild erzeugt, daß in Fig. 2c dargestellt ist und in dem die Struktur des Objektes in Schwarz-Weiß-Werten erscheint. Dieses binäre Bildsignal wird in den Mikroprozessor 9 eingegeben und mittels eines bekannten Maskenverfahrens unter Verwendung von gespeicherten, die Grundstruktur des Objektes wiedergebenden Masken in eine Information über die Identität des Objektes und seine Lagekoordinaten verarbeitet. Eine derartige Bildverarbeitung ist aufgrund der gewählten Vorverarbeitung in der Differenzstufe 6 und im Komparator 7 mit einem einfachen Algorithmus möglich.

In dem Fall, in dem die Erkennung eines Objektes anhand der Kanten an einem Hohlraum erfolgen soll, sind die Kamera 2 und die Lichtquelle 4 so angeordnet, daß die Lichtquelle 4 senkrecht auf das Objekt gerichtet ist, während die Kamera 2 ein Bild unter einem Winkel von ca. 45° von oben aufnimmt, wie es in Fig. 3 dargestellt ist. Dadurch ist gewährleistet, daß der Hohlraum immer einen Kontrastunterschied zu den ihn umgebenden Kanten aufweist, die dann leicht zu erfassen sind, und daß darüber hinaus auch bei einer Anordnung einer geraden Horizontalkante des Objektes schräg von vorne nach hinten diese Kante des Objektes erkannt werden kann, da eine Information über alle drei Raumkoordinaten verfügbar ist.

Wenn das oben beschriebene Verfahren und die oben beschriebene Vorrichtung beispielsweise im Rahmen eines gesteuerten Prozesses der Aufnahme einer Last, beispielsweise der Aufnahme einer Palette durch einen gesteuerten Gabelstapler verwandt werden, dann kann eine Vorpositionierung des Gabelstaplers derart erfolgen, daß dieser bereits in der Nähe der Stelle angeordnet wird, an der die aufzunehmende Palette vermutet wird. Über die oben beschriebene Bildverarbeitung wird dann ermittelt, ob eine Palette sich an dieser Stelle tatsächlich befindet und welche genaue Position die Palette bezüglich des Gabelstaplers hat. Nach Ermittlung der Koordinatenlage der Palette kann der Gabelstapler genau so gesteuert werden, daß er mit seiner Gabel in die dafür vorgesehenen Hohlräume der Palette fährt, um diese anzuheben.

Das oben beschriebene Verfahren und die oben beschriebene Vorrichtung arbeiten dabei über eine sehr einfache schnelle und kostengünstige Bildverarbeitung, die die Identifizierung und Lokalisierung von Werkstücken oder Transportpaletten mit hoher Genauigkeit ermöglichen.

## Patentansprüche

1. Verfahren zum Identifizieren und Lokalisieren eines Objektes, dadurch gekennzeichnet, daß
- ein Bild eines räumlichen Bereiches aufgenommen wird, von dem vermutet wird, daß er an einem bestimmten Teil das zu erkennende Objekt aufweist,
- zu einem gegebenen Zeitpunkt das Bild gespeichert und im wesentlichen nur der Teil des räumlichen Bereiches künstlich beleuchtet wird, an dem das zu erkennende Objekt vermutet wird,
- ein Differenzbild zwischen dem mit künstlicher Beleuchtung aufgenommenen und dem gespeicherten Bild erzeugt wird,
- das Differenzbild in ein binäres Bild umgewandelt wird und
- das binäre Bild einer Bildverarbeitung zum Identifizieren und Lokalisieren des Objektes unterworfen wird.

2. Verfahren nach Anspruch 1, dadurch gekennzeichnet, daß die künstliche Beleuchtung mit einem Licht erfolgt, dessen spektrale Verteilung sich von der spektralen Verteilung des Lichtes der im aufgenommenen räumlichen Bereich herrschenden Lichtverhältnisse unterscheidet.

3. Verfahren nach Anspruch 2, dadurch gekennzeichnet, daß das Licht vor der Aufnahme des Bildes mit einem Bandpaß gefiltert wird, der der spektralen Verteilung des Lichtes der künstlichen Beleuchtung entspricht.

4. Verfahren nach einem der vorhergehenden Ansprüche, dadurch gekennzeichnet, daß die Bildverarbeitung mit einem Maskenverfahren unter Verwendung von gespeicherten, die Grundstrukturen des Objektes wiedergebenden Masken erfolgt, die über das Objekt im binären Bild geschoben werden und aus deren Lage dann die Koordinaten der Position des Objektes bestimmt werden.

5. Vorrichtung zum Identifizieren und Lokalisieren eines Objektes, gekennzeichnet durch
- eine Videokamera (2),
- einen Bildspeicher (5), an dem die Bildsignale der Videokamera (2) liegen,
- eine künstlichen Lichtquelle (4), die so angeordnet und ausgebildet ist, daß sie im wesentlichen nur einen bestimmten Teil des Sichtfeldes der Kamera (2) beleuchtet, an dem das zu erkennende Objekt vermutet wird,
- eine Zeitsteuerung (10) zum Anschalten der Lichtquelle (4) und zum Speichern der Ausgangsbildsignale der Kamera (2) im Bildspeicher (5),
- eine Differenzstufe (6), an der das Ausgangsbild des Bildspeichers (5) und das Ausgangsbild der Kamera (2) liegen,
- eine Komparatorstufe (7), die das Ausgangsbild der Differenzstufe (6) empfängt und in ein binäres Bild umwandelt, und
- einen Bildprozessor (9), der das binäre Bild des Komparators (7) zur Identifizierung und Lokalisierung des Objektes auswertet.

6. Vorrichtung nach Anspruch 5, gekennzeichnet durch ein der Videokamera (2) vorgesetztes Filter (3) mit einem Bandpaß, der der spektralen Verteilung des Lichtes der künstlichen Lichtquelle (4) entspricht.

7. Vorrichtung nach Anspruch 6, dadurch gekennzeichnet, daß die Kamera (2) eine CCD-Videokamera ist, der Bandpaß des Filters (3) eine Zentralwellenlänge von 800 nm und eine Breite von ca. 50 nm hat, und die künstliche Lichtquelle (4) eine Lampe mit einer Farbtemperatur von etwa 2900°K ist.

8. Vorrichtung nach einem der Ansprüche 5 bis 7, dadurch gekennzeichnet, daß der Bildprozessor (9) so ausgebildet ist, daß er das vom Komparator (7) kommende binäre Bild mit einer gespeicherten Strukturmaske des Objektes vergleicht, über das Objekt im binären Bild geschoben und aus der Lage der Maske in die Koordinaten der Position des Objektes bestimmt.

9. Vorrichtung nach einem der Ansprüche 5 bis 8, dadurch gekennzeichnet, daß die Lichtquelle (4) senkrecht auf den Teil gerichtet ist, an dem das zu erkennende Objekt vermutet wird, und die Kamera (2) unter einem Winkel von 45° schräg von oben nach unten gerichtet ist.
